# EUROPEAN PATENT SPECIFICATION

(11) **EP 1 768 209 B1**
(45) Date of publication and mention of the grant of the patent: **04.03.2009**
(21) Application number: 05814783.6
(22) Date of filing: 12.12.2005
(51) Int. Cl.: H01M 10/40, H01M 2/16, H01M 4/02

(54) **LITHIUM ION SECONDARY BATTERY**
LITHIUMIONEN-SEKUNDÄRBATTERIE
BATTERIE SECONDAIRE AU LITHIUM-ION

(30) Priority: 13.12.2004 JP 2004359419
(43) Date of publication of application: 28.03.2007
(73) Proprietor: Panasonic Corporation, Kadoma-shi Osaka 571-8501 (JP)
(72) Inventor: NAKURA, Kensuke, MATSHUSHITA ELECTIC INDUSTRIAL, Shiromi 1-chome, Chuo-ku, Osaka 540-6319 (JP); SHIMADA, Mikinari, MATSHUSHITA ELECTIC INDUSTRIAL, Shiromi 1-chome, Chuo-ku, Osaka 540-6319 (JP)
(74) Representative: TBK-Patent
(86) International application number: PCT/JP2005/022808
(87) International publication number: WO 2006/064775

(56) References cited:
- EP-A- 1 184 917
- JP-A- 7 220 759
- JP-A- 9 190 814
- JP-A- 9 237 622
- JP-A- 10 294 100
- JP-A- 11 102 730
- JP-A- 2000 100 408
- JP-A- 2000 100 408
- JP-A- 2005 259 639
- JP-A- 2005 302 634

## Description

The present invention relates to lithium ion secondary batteries, and, particularly, to a highly reliable lithium ion secondary battery that offers high safety under internal short-circuit and overcharge conditions.

### Background Art

Lithium ion secondary batteries are equipped with a separator having the function of electrically insulating the positive electrode from the negative electrode while retaining a non-aqueous electrolyte. Currently, a thermoplastic porous film is mainly used as the separator. A thermoplastic resin, such as polyethylene, is used as the material of the thermoplastic porous film.

A separator made of a thermoplastic porous film is usually subject to shrinking at high temperatures. Thus, when a sharp object, such as a nail, penetrates a battery, heat is instantaneously produced in a short-circuit reaction, thereby causing the separator to shrink. The resulting expansion of the short-circuit produces more reaction heat, which may further promote abnormal overheating.

In order to ensure safety under short-circuit conditions, there has been proposed a separator composed of a combination of heat-resistant para aromatic polyamide and a thermoplastic polymer. There has also been proposed a separator composed of a thermoplastic porous film and a heat-resistant porous film adjacent to at least a part of the thermoplastic porous film. As the material of the heat-resistant porous film, for example, polyimide, polyamide, and inorganic material have been proposed (see Patent Document 1). Also, forming a porous membrane on an electrode has been proposed in order to prevent internal short-circuits caused by substances separated from the electrode, although this is not intended to improve safety under internal short-circuit conditions (see Patent Document 2).

Further, in the event of a failure of a charger, a battery is overcharged to a voltage beyond a charge cut-off voltage. When the battery is overcharged to a capacity close to the theoretical capacity of the positive and negative electrode active materials, the battery resistance increases, thereby producing Joule's heat. This Joule's heat in turn causes the self-decomposition reaction of the positive and negative electrode active materials whose thermochemical stability has deteriorated due to the overcharge. If this self-decomposition reaction proceeds, an exothermic reaction may occur due to the oxidation of the non-aqueous electrolyte, thereby promoting abnormal overheating.

Thus, there has been proposed a mechanism that mechanically breaks current by utilizing an increase in inner pressure immediately before the battery overheats abnormally. There has also been proposed a mechanism that breaks current by means of a PTC device when the temperature of the battery itself becomes high. Further, it has been proposed to utilize a mechanism of an intentionally caused internal short-circuit in addition to a mechanism that breaks current by shutting down a separator made of a low melting point polyolefin when the battery temperature becomes high (see Patent Document 3). As such an internal short-circuit mechanism, there has been proposed an automatic discharge mechanism in which a starting substance of a conductive polymer is added to a non-aqueous electrolyte such that the battery is internally short-circuited when overcharged.

As described above, the safety under internal short-circuit conditions and the safety under oververcharge conditions are assured based on different techniques. Particularly in recent years, attempts have been made to assure safety under overcharge conditions by utilizing the above-mentioned safety mechanisms and to assure safety under internal short-circuit conditions, which such mechanisms cannot provide, by optimizing the raw materials of the positive electrode, negative electrode and separator.

In order to assure safety under internal short-circuit conditions, it is necessary to imagine all possible situations in which actual products may become internally short-circuited and take preventive measures. That is, it is necessary to take measures not only to prevent internal short-circuits caused by substances separated from electrodes as in Patent Document 2, but also to assure safety in the event of an internal short-circuit caused by a nail penetration test.
Patent Document 1: Japanese Laid-Open Patent Publication No. Hei 10-006453
Patent Document 2: Japanese Laid-Open Patent Publication No. Hei 07-220759
Patent Document 3: Japanese Laid-Open Patent Publication No. Hei 10-321258

JP 2000-100408 discloses a non-aqueous electrolyte secondary battery, which comprises a positive electrode sheet, a separator, a non-aqueous electrolyte, and a negative electrode sheet. The separator is composed of a heat-resistant porous layer and a shut down layer, and the heat-resistant porous layer is arranged on the positive electrode sheet side. The heat-resistant porous layer may be composed of a heat-resistant resin having the deflection temperature under load of not less than 100 °C, and the limiting oxygen index of not less than 20. The shut down layer is a porous layer composed of a thermoplastic resin, and it may substantially become a non-porous layer at the temperature of 80 °C to 180 °C.

JP 09-190814 describes another non-aqueous electrolyte secondary battery, in which porous heat resisting insulation layers are formed on both surfaces of the negative electrode active material of a negative electrode collector. They are cut to form a negative electrode. Positive electrodes having positive electrode active material layers on both surfaces of a positive electrode collector are also obtained. The negative electrode and the positive electrode are laminated through a separator, and the laminated body is wound numerous turns in a spiral form. An insulating sheet is wound on the outermost periphery so as to form an electrode spiral body. The porous heat resisting insulation layer is provided on the negative electrode active layer, but it may be provided on the positive electrode active material layer, or on both layers. Consequently, even though an external heating or a heating by an external shock is generated, the insulation can be maintained between the positive electrode and the negative electrode, and as a result, an advantage of not short-circuiting the electrodes at a large area can be obtained.

### Disclosure of Invention

Problem That the Invention Is to Solve

The present inventors have tried to assure safety under internal short-circuit conditions by utilizing a heat-resistant porous film as disclosed in Patent Document 1 and assure safety under overcharge conditions by utilizing a safety mechanism as disclosed in Patent Document 3. However, according to an evaluation method for a higher degree of safety under overcharge conditions, they have found that the safety mechanism does not function effectively under overcharge conditions. For example, assuring safety is difficult when a fully charged battery is overcharged at a high rate of 1/4 hour-rate (4 CmA) in a thermally insulated condition.

The reason why the safety mechanism does not function effectively is as follows.
In the case of a high-rate overcharge, a large amount of current flows. Thus, in order to prevent the intentionally caused short-circuit from being damaged, it is necessary to keep the resistance of the short-circuit at a significantly low level. The polyolefin separator usually used in lithium secondary batteries becomes softened and thinner when the temperature rises during overcharge. As a result, the distance between the positive electrode and the negative electrode decreases, so that a short-circuit with a low resistance occurs. However, in the case of a separator including a heat-resistant porous film, which has a high heat resistance, its thickness does not change even if the battery temperature rises. Therefore, the distance between the positive electrode and the negative electrode does not decrease, so that a short-circuit with a high resistance occurs. As a result, the intentionally caused short-circuit is destroyed by a large amount of overcharge current, so that the safety mechanism does not function normally under overcharge conditions.

In view of the above, the present invention intends to provide a lithium ion secondary battery that offers excellent safety in both overcharge and internal short-circuit conditions.

### Means for Solving the Problem

The present invention relates to a lithium ion secondary battery including: a positive electrode comprising a composite lithium oxide; a negative electrode capable of charge and discharge; a separator; and a non-aqueous electrolyte comprising a non-aqueous solvent and a solute dissolved therein. The separator comprises at least one heat-resistant porous film comprising a heat-resistant resin with a heat deformation temperature of 200°C or more and at least one shut-down layer. A porous membrane is bonded to a surface of at least one selected from the positive electrode and the negative electrode, and the porous membrane comprises an inorganic oxide filler and a binder.

The heat-resistant resin is preferably at least one selected from the group consisting of polyimide, aramid, and polyphenylene sulfide.
The shut-down layer desirably comprises a thermoplastic porous film with a shut-down temperature of 80°C or more and 180°C or less. As used herein, the shut-down temperature refers to the temperature at which the thermoplastic porous film becomes substantially non-porous.

In the porous membrane, the ratio of the inorganic oxide filler to the total of the inorganic oxide filler and the binder is preferably 50% by weight or more and 99% by weight or less. Also, the inorganic oxide filler preferably comprises at least one selected from the group consisting of alumina and magnesia.

### Effects of the Invention

According to the present invention, even when a heat-resistant porous film is used to heighten safety under internal short-circuit conditions, an internal short-circuit mechanism is allowed to function effectively in the event of an overcharge. As a result, the safety under internal short-circuit conditions and the safety under overcharge conditions become mutually compatible, so that a highly reliable lithium ion battery can be obtained.

### Best Mode for Carrying Out the Invention

According to the present invention, a porous membrane comprising an inorganic oxide filler and a binder is bonded to a surface of at least one selected from the positive electrode and the negative electrode, so that when a lithium ion secondary battery with a heat-resistant porous film and a shut-down layer is overcharged at a high rate, a firm short-circuit occurs and the internal short-circuit mechanism functions effectively. As used herein, "overcharged at a high rate" means being overcharged at a current of approximately 4 CmA.

When a lithium ion secondary battery has a combination of a heat-resistant porous film, a shut-down layer, and a porous membrane, a firm short-circuit occurs upon a high-rate overcharge and the internal short-circuit mechanism functions effectively. The reason for this is probably as follows.

The porous membrane on the surface of at least one selected from the positive electrode and the negative electrode contains an inorganic oxide, so it has a high heat resistance. Hence, the porous membrane is expected to have the same function as the heat-resistant porous film. That is, the safety under internal short-circuit conditions can be doubly assured.

It is generally known that when a lithium ion secondary battery is overcharged, lithium metal is deposited on the electrode surface. In the case of using positive and negative electrodes having on the surface no porous membrane that contains an inorganic oxide filler and a binder, lithium ion transfer through the separator (overcharge reaction) proceeds uniformly. Thus, lithium metal is deposited on the whole electrode surface. On the other hand, in the case of using an electrode having a porous membrane on the surface thereof, overcharge reaction proceeds locally since the porous membrane covering the electrode surface is partially thin or thick. Hence, it has been made clear by detailed study of the present inventors that even when the charge depth is relatively shallow, lithium metal is partially deposited. An overcharge current is concentrated onto the partially deposited lithium metal. As a result, the deposition of lithium metal is further accelerated, thereby resulting in formation of relatively large (low-resistant) conductive paths of lithium metal. These conductive paths function as an internal short-circuit mechanism. It should be noted that the porous membrane is more preferably formed on the negative electrode surface. This is because when the lithium secondary battery is overcharged, the deposition of lithium metal tends to occur from the negative electrode surface.

However, this combination of an electrode having a porous membrane on the surface and a heat-resistant porous film is not sufficient to suppress generation of heat upon a high-rate overcharge. This is because the deposited lithium is scattered and dissolves depending on the potential of the overcharged positive electrode. Even when lithium metal is locally deposited, if it is scattered, the resulting short-circuit paths become narrow. Hence, lithium metal tends to dissolve and the conductive paths disappear before they fully exhibit their function.

On the other hand, in the case of using a separator that comprises a heat-resistant porous film and a shut-down layer, larger (lower-resistant) conductive paths of lithium metal can be formed more locally than the case of using a separator including only a heat-resistant porous film. The reason is as follows. In the case of the separator including a shut-down layer, its thickness decreases due to heat generated by a short-circuit. Thus, the distance between the positive electrode and the negative electrode decreases, and an overcharge current is concentrated onto only the lithium deposited in an early stage. As a result, the scattering of deposited lithium is suppressed, and even if dissolution reaction takes place, firm short-circuit paths can be formed. That is, although the deposition reaction of lithium metal takes place simultaneously with the dissolution reaction thereof, the deposited lithium can function sufficiently as the firm short-circuit paths.

The heat-resistant porous film of the separator contains a heat-resistant resin with a heat deformation temperature of 200°C or more. As used herein, the heat deformation temperature refers to deflection temperature under a load of 1.82 MPa according to ASTM-D648, a test standard of American Society for Testing and Materials. Also, in order to reliably assure safety under internal short-circuit conditions, the heat deformation temperature of the heat-resistant resin is more preferably 250°C or more.

The heat-resistant resin with a heat deformation temperature of 200°C or more is not particularly limited, and examples include polyimide, aramid, polyphenylene sulfide, polyamide imide, polyetherimide, polyethylene terephthalate, polyether nitrile, polyether ether ketone, and polybenzoimidazole. They may be used singly or in combination of two or more of them. Among them, polyimide, aramid, and polyphenylene sulfide are particularly preferred since their heat resistance is very high.

The thickness of the heat-resistant porous film is not particularly limited, but it is preferably 1 to 16 µm, and more preferably 1 to 10 µm, in view of the balance between safety under overcharge conditions and safety under internal short-circuit conditions. If the heat-resistant porous film is too thick, the distance between the positive electrode and the negative electrode does not decrease so much when the shut-down layer functions. Thus, the internal short-circuit mechanism may not function.

The heat-resistant porous film preferably contains an inorganic oxide filler in addition to the heat-resistant resin. However, the ratio of the inorganic oxide filler to the total of the heat-resistant resin and the inorganic oxide filler is desirably 33 to 98% by weight. If the ratio of the inorganic oxide filler is too high, the separator has high hardness, so that it is difficult to obtain a flexible separator.

The inorganic oxide filler to be contained in the heat-resistant porous film may be, for example, the same material as the inorganic oxide filler to be contained in the porous membrane which will be described later, but there is no particular limitation.

The shut-down layer of the separator may be any layer that exhibits the shut-down function, but it is desirably made of a thermoplastic porous film. Desirably, the thermoplastic porous film becomes substantially non-porous, i.e., its pores are closed, at 80 to 180 °C, preferably 100 to 140 °C.

The thermoplastic porous film preferably comprises a thermoplastic resin with a low heat resistance. Specifically, polyolefins such as polypropylene and polyethylene are preferable since they are highly resistant to non-aqueous solvents and highly hydrophobic. They may be used singly or in combination of two or more of them. For example, a monolayer film composed of polyethylene or a multi-layer film composed of a polyethylene layer and a polypropylene layer may be used as the thermoplastic porous film.

The shut-down layer may contain a filler as long as its function is not impaired. The filler may be any material that does not cause a chemical change in the battery. For example, glass fiber, mica, whisker, and ceramic fine powder are used.

The total thickness of the heat-resistant porous film and the shut-down layer is not particularly limited, but it is preferably 5 to 35 µm, and more preferably 10 to 25 µm in view of the balance between safety under overcharge conditions, safety under internal short-circuit conditions, and battery capacity. The pore size of the separator may be in a common range, for example, 0.01 to 10 µm.

Next, a description is made of the porous membrane bonded to the surface of at least one selected from the positive electrode and the negative electrode. The porous membrane comprises an inorganic oxide filler and a binder. Since the porous membrane is bonded to the electrode surface, it hardly deforms even when the separator shrinks due to heat. Hence, in the event of an internal short-circuit, it performs the function of preventing the short-circuit from expanding.

The binder to be contained in the porous membrane may be polyethylene (PE), polypropylene (PP), polytetrafluoroethylene (PTFE), polyvinylidene fluoride (PVDF), styrene butadiene rubber (SBR), or the like. They may be used singly or in combination of two or more of them. However, when the porous membrane is bonded to the surface of the negative electrode, it is preferable to use a binder that is dissolved or dispersed in a non-aqueous solvent, because most high-performance negative electrodes contain a cellulose-type water-soluble resin as a thickener. If a binder that is dissolved or dispersed in water is mixed with an inorganic oxide filler and the resultant slurry is applied to the negative electrode surface, the thickener in the negative electrode swells with the water contained in the undried porous membrane. As a result, the negative electrode deforms, thereby causing a problem of a significant decrease in yields.

The porous membrane desirably contains a binder with a decomposition start temperature of 200°C or more. Due to the temperature rise upon overcharge or the heat generated by an internal short-circuit, the temperature of the heat generated by an internally short-circuited site locally reaches approximately 200°C. Thus, if the binder has a low decomposition start temperature, it disappears and the porous membrane deforms. Also, if the binder used is a resin that has a high decomposition start temperature but softens at high temperatures, the porous membrane deforms. Upon the deformation of the porous membrane, the deposited lithium is prevented from growing in the direction perpendicular to the electrode surface, so that the deposited lithium cannot efficiently penetrate the heat-resistant porous film. That is, the deposited lithium is unlikely to be utilized as the internal short-circuit mechanism, thereby resulting in degradation of safety under overcharge conditions.

As the binder of the porous membrane, the use of a rubber-like polymer having a polyacrylonitrile chain is particularly preferred. This is because a rubber-like polymer having a polyacrylonitrile chain has a high decomposition start temperature, is amorphous, and therefore has no crystal melting point. Also, in terms of making the electrode plate flexible, the binder desirably has rubber elasticity. When the porous membrane contains a binder with rubber elasticity, it is resistant to cracking and damaging when wound with the positive electrode and the negative electrode, unlike a hard porous membrane. Thus, it has an advantage of high production yields.

Inorganic oxides are highly heat-resistant and electrochemically stable inside batteries. Hence, an inorganic oxide filler is used as the filler to be contained in the porous membrane. Also, an inorganic oxide filler can be easily dispersed in a liquid component, being suited for preparing a paint.

It is preferred to use, for example, alumina or magnesia as the inorganic oxide filler, since they are highly electrochemically stable. They may be used singly or in combination of two or more of them. To obtain a dense porous membrane, it is also possible to use a mixture of inorganic oxide fillers that are of the same kind but have different mean particle sizes. In this case, the particle size distribution of the mixture of inorganic oxide fillers shows two or more peaks.

The mean particle size (volume basis median diameter) of the inorganic oxide filler is preferably 5 *µ*m or less, and more preferably 3 µm or less. If the mean particle size is too large, it is difficult to form a thin porous membrane.

The ratio of the inorganic oxide filler to the total of the inorganic oxide filler and the binder contained in the porous membrane is preferably 50% by weight or more and 99% by weight or less, and more preferably 95 to 98 % by weight. If the ratio of the inorganic oxide filler is less than 50% by weight, the amount of the binder is too large, so that it is difficult to control the pore structure of the porous membrane. If the ratio of the inorganic oxide filler exceeds 99% by weight, the amount of the binder is too small, so that the adhesion of the porous membrane to the electrode surface decreases. Thus, the porous membrane may separate therefrom.

The thickness of the porous membrane is not particularly limited, but it is preferably 1 to 10 µm, and more preferably 2 to 6 µm, in view of the balance between safety under overcharge conditions, safety under internal short-circuit conditions, and battery capacity.

The positive electrode contains a composite lithium oxide as the active material. The composite lithium oxide is not particularly limited, but preferable examples which may be used include lithium cobaltate (LiCoO₂), modified lithium cobaltate in which a part of cobalt is replaced with another element such as aluminum or magnesium, lithium nickelate (LiNiO₂), modified lithium nickelate in which a part of nickel is replaced with another element such as cobalt, manganese, or aluminum, lithium manganate (LiMn₂O₄), and modified lithium manganate in which a part of manganese is replaced with another element. They may be used singly or in combination of two or more of them.

The negative electrode contains lithium metal, a lithium alloy, a carbon material capable of absorbing and desorbing lithium, a substance composed simply of silicon, a substance composed simply of tin, a silicon compound, a tin compound, a silicon alloy, a tin alloy, or the like as the active material. They may be used singly or in combination of two or more of them. The lithium alloy preferably contains at least one selected from the group consisting of tin, aluminum, zinc, and magnesium. As the carbon material capable of absorbing and desorbing lithium, various natural graphites and artificial graphites are preferably used. The silicon compound is preferably a silicon oxide (SiOₓ: 0<x<2).

The positive electrode and the negative electrode may contain optional components such as a binder and a conductive agent in addition to the active material which is an essential component.
Exemplary binders which may be used include polytetrafluoroethylene (PTFE), modified acrylonitrile rubber particles (e.g., BM-500B available from Zeon Corporation), polyvinylidene fluoride (PVDF), styrene butadiene rubber (SBR), modified SBR, carboxymethyl cellulose (CMC), polyethylene oxide (PEO), and soluble modified acrylonitrile rubber (e.g., BM-720H available from Zeon Corporation). They may be used singly or in combination of two or more of them. In order to efficiently improve safety under overcharge conditions, it is desirable to use SBR or modified SBR and a water-soluble resin (e.g., cellulose-type resin such as CMC) in combination as the negative electrode binder.

Exemplary conductive agents which may be used include carbon blacks such as acetylene black and ketjen black, various natural graphites, and artificial graphites. They may be used singly or in combination of two or more of them.

The non-aqueous electrolyte comprises a non-aqueous solvent and a solute, and the solute is dissolved in the non-aqueous solvent. Preferable solutes are lithium salts such as LiPF₆ and LiBF₄, but there is no particular limitation. Such lithium salts may be used singly or in combination of two or more of them. Exemplary non-aqueous solvents which may be used include ethylene carbonate (EC), propylene carbonate (PC), dimethyl carbonate (DMC), diethyl carbonate (DEC), methyl ethyl carbonate (MEC), γ-butyrolactone, and γ-valerolactone, but there is no particular limitation. Such non-aqueous solvents may be used singly, but the use of a combination of two or more of them is preferred.

The non-aqueous electrolyte may contain an additive that will form a good film on the positive electrode or negative electrode. Examples of such additives which may be used include vinylene carbonate (VC), vinyl ethylene carbonate (VEC), and cyclohexyl benzene (CHB). These additives may be used singly or in combination of two or more of them.

### 〈〈Comparative Example 1〉〉

### (i) Preparation of positive electrode

A positive electrode mixture paste was prepared by stirring 3 kg of lithium cobaltate, 1.5 kg of "PVDF #1320 (N-methyl-2-pyrrolidone solution containing 12% by weight of PVDF)" available from Kureha Corporation, 120 g of acetylene black, and a suitable amount of N-methyl-2-pyrrolidone (NMP) with a double-arm kneader. This paste was applied onto both sides of a 20-µm-thick aluminum foil, dried, and rolled such that the total thickness was 160 µm. Thereafter, the electrode plate obtained was slit to a width such that it was capable of being inserted into a cylindrical 18650 battery can, to obtain a positive electrode.

### (ii) Preparation of negative electrode

A negative electrode mixture paste was prepared by stirring 3 kg of artificial graphite, 200 g of "BM-400B (dispersion containing 40% by weight of modified SBR particles)" available from Zeon Corporation, 50 g of CMC, and a suitable amount of water with a double-arm kneader. This paste was applied onto both sides of a 12-µm-thick copper foil, dried, and rolled such that the total thickness was 160 µm. Thereafter, it was slit to a width such that it was capable of being inserted into the cylindrical 18650 battery can, to obtain a negative electrode.

### (iii) Preparation of heat-resistant porous film

200 g of drawn short fibers of polyphenylene sulfide were dissolved as a heat-resistant resin in 1-chloronaphthalene at 210 to 220 °C. The resultant solution was mixed with 10 g of alumina with a median diameter of 0.3 µm as a filler. The resultant mixture was fully stirred and applied onto a 210°C glass plate with a bar coater with a gap of 200 µm, and the coating film was dried in a drying furnace at 250°C for 3 hours. As a result, a dark brown film was obtained. This dark brown film was sequentially washed with N,N-dimethylformamide and methanol, and finally washed with pure water to obtain a heat-resistant porous film. The heat-resistant porous film had a thickness of 30 µm.

The short fibers of polyphenylene sulfide used were "Torcon" (single yarn fineness 0.9 denier, fiber length 6 mm) available from Toray Industries Inc. The deflection temperature of the polyphenylene sulfide under a load of 1.82 MPa according to the test standard ASTM-D648 (heat deformation temperature) was 260°C or more.

### (iv) Fabrication of battery

The positive electrode and the negative electrode were wound together with the heat-resistant porous film interposed therebetween, and inserted into a battery can. Further, 5 g of a non-aqueous electrolyte was added into the battery can. Thereafter, the opening of the battery can was sealed to obtain a cylindrical 18650 lithium ion secondary battery. The non-aqueous electrolyte used was prepared by dissolving LiPF₆ at a concentration of 1.5 mol/L in a solvent mixture of ethylene carbonate (EC) and methyl ethyl carbonate (MEC) in a volume ratio of 3:7.

### 〈〈Comparative Example 2〉〉

A raw material paste for forming a porous membrane was prepared by stirring 970 g of alumina with a median diameter 0.3 µm, 375 g of "BM-720H (solution containing 8% by weight of modified acrylonitrile rubber (decomposition start temperature 320°C))" available from Zeon Corporation, and a suitable amount of NMP with a double-arm kneader. A battery was produced in the same manner as in Comparative Example 1 except that this paste was applied onto both sides of the positive electrode and dried to form a porous membrane of 5 µm on each side.

### 〈〈Comparative Example 3〉〉

A battery was produced in the same manner as in Comparative Example 1 except that the raw material paste of porous membrane of Comparative Example 2 was applied onto both sides of the negative electrode and dried to form a porous membrane of 5 µm on each side.

### 〈〈Comparative Example 4〉〉

A heat-resistant porous film comprising polyphenylene sulfide was prepared in the same manner as in Comparative Example 1 except that the thickness was changed to 5 µm. This heat-resistant porous film and a 25-µm thick shut-down layer were layered and bonded together by passing them through a thermal roll press heated to 90°C, to obtain a separator comprising the heat-resistant porous film and the shut-down layer. This separator had a thickness of 30 µm. A battery was produced in the same manner as in Comparative Example 1 except for the use of this separator comprising the heat-resistant porous film and the shut-down layer. The shut-down layer used was a composite film of polyethylene and polypropylene (2300 available from Celgard K. K.). The shut down temperature of this composite film is 120°C.

### 〈〈Examples 1 and 2〉〉

Batteries of Examples 1 and 2 were produced in the same manner as in Comparative Examples 2 and 3, respectively, except for the use of the separator of Comparative Example 4 comprising the heat-resistant porous film and the shut-down layer.

### 〈〈Comparative Examples 5 to 7〉〉

200 g of aramid resin was evenly dissolved in 800 g of NMP at 80°C. The resultant solution was mixed with 10 g of lithium chloride powder (available from Kanto Chemical Co., Inc.) and fully stirred to dissolve it. The resultant mixture was applied onto a 60°C glass plate with a bar coater with a gap of 200 µm, and the coating film was dried in a drying furnace at 110°C for 3 hours. As a result, a white film was obtained. This white film was immersed in a hot bath of distilled water at 60°C for 2.5 hours so that the lithium chloride was dissolved and removed. Thereafter, the film was washed with pure water to obtain a heat-resistant porous film. The heat-resistant porous film had a thickness of 30 *µ*m. Batteries of Comparative Examples 5 to 7 were produced in the same manner as in Comparative Examples 1 to 3, respectively, except for the use of this heat-resistant porous film. The aramid resin used was "KEVLAR" (fiber length 3 mm) available from Dupont-Toray Co., Ltd. The deflection temperature of the aramid resin under a load of 1.82 MPa according to the test standard ASTM-D648 (heat deformation temperature) was 320°C or more.

### 〈〈Comparative Example 8〉〉

The liquid mixture of Comparative Example 5 comprising aramid resin, lithium chloride powder, and NMP was applied onto one side of a 25-µm-thick shut-down layer that was heated to 60°C (2300 available from Celgard K. K.) with a bar coater with a gap of 100 *µ*m and dried in a drying furnace at 110°C for 3 hours to form a white film. The shut-down layer with the white film was immersed in a hot bath of distilled water at 60°C for 2 hours so that the lithium chloride was dissolved and removed. It was then washed with pure water to obtain a separator comprising a heat-resistant porous film and the shut-down layer. The separator had a thickness of 30 µm. A battery was produced in the same manner as in Comparative Example 1 except for the use of this separator comprising the heat-resistant porous film and the shut-down layer.

### 〈〈Examples 3 and 4〉〉

Batteries of Examples 3 and 4 were produced in the same manner as in Comparative Examples 2 and 3, respectively, except for the use of the separator of Comparative Example 8 comprising the heat-resistant porous film and the shut-down layer.

### 〈〈Comparative Examples 9 to 12 and Examples 5 and 6〉〉

Batteries of Comparative Examples 9 to 12 and Examples 5 and 6 were produced in the same manner as in Comparative Example 5 to 8 and Examples 3 and 4, respectively, except for the use of polyimide as the heat-resistant resin in place of aramid. The polyimide resin used was "Aurum PL450C" available from Mitsui Chemicals. Inc. The deflection temperature of the polyimide resin under a load of 1.82 MPa according to the test standard ASTM-D648 (heat deformation temperature) was 360°C or more.

### 〈〈Examples 7 to 13〉〉

Batteries of Examples 7 to 13 were produced in the same manner as in Example 4 except that the content of the inorganic oxide filler (alumina) contained in the porous membrane was varied to 30% by weight, 50% by weight, 70% by weight, 90% by weight, 95% by weight, 99% by weight and 99.5% by weight, respectively.

### 〈〈Examples 14 to 16〉〉

Batteries of Examples 14 to 16 were produced in the same manner as in Example 4 except that the binder contained in the porous membrane was changed to a copolymer of trifluorochloroethylene and vinylidene fluoride (crystal melting point 190°C, decomposition start temperature 380°C), PVDF (crystal melting point 174°C, decomposition start temperature 360°C) and CMC (decomposition start temperature 245°C), respectively.

### 〈〈Comparative Example 13 and Example 17〉〉

Batteries of Comparative Example 13 and Example 17 were produced in the same manner as in Example 4 except that the filler contained in the porous membrane was changed to polyethylene beads (median diameter 0.3 µm) and titania (median diameter 0.3 µm), respectively.

### 〈〈Example 18〉〉

A battery was produced in the same manner as in Example 4 except that 3 parts by weight of PVDF was used as the negative electrode binder per 100 parts by weight of the artificial graphite instead of using BM-400B and CMC.

### 〈〈Reference Example 19〉〉 (outside the scope of the claims)

A battery was produced in the same manner as in Example 4 except for the use of a copolymer of trifluorochloroethylene and vinylidene fluoride with a heat deformation temperature of 200°C or less (crystal melting point 190°C) as the heat-resistant resin of the heat-resistant porous film in place of aramid.
Tables 1 and 2 summarize the features of the above-described batteries.

**[Table 1]**

| | Separator | | Porous membrane | | | | | | Negative electrode Binder |
|---|---|---|---|---|---|---|---|---|---|
| | Heat-resistant resin | Shut-down layer | Position | Filler | | Binder | | | |
| | | | | Kind | Amount (Part by weight) | Kind | Crystal melting point (°C) | Decomposition start temperature (°C) | Kind |
| Example 1 | Polyphenylene sulfide | Polyethylene + polypropylene | Positive electrode | Alumina | 97 | BM-720H | - (Amorphous) | 320 | BM-400B +CMC |
| Example 2 | | | Negative electrode | | | | | | |
| Example 3 | Aramid | | Positive electrode | | | | | | |
| Example 4 | | | Negative electrode | | | | | | |
| Example 5 | Polyimide | | Positive electrode | | | | | | |
| Example 6 | | | Negative electrode | | | | | | |
| Example 7 | Aramid | | Negative electrode | | 30 | | | | |
| Example 8 | | | | | 50 | | | | |
| Example 9 | | | | | 70 | | | | |
| Example 10 | | | | | 90 | | | | |
| Example 11 | | | | | 95 | | | | |
| Example 12 | | | | | 99 | | | | |
| Example 13 | | | | | 99.5 | | | | |
| Example 14 | | | | | 97 | Copolymer | 190 | 380 | |
| Example 15 | | | | | | PVDF | 174 | 360 | |
| Example 16 | | | | | | CMC | - | 245 | |
| Example 17 | | | | Titania | | BM-720H | - (Amorphous) | 320 | |
| Example 18 | | | | Alumina | | | | | PVDF |
| Example 19 | Copolymer | | | | | | | | BM-400B +CMC |

| | | | | | | | | | |
|---|---|---|---|---|---|---|---|---|---|
| Copolymer: copolymer of trifluorochloroethylene and vinylidene fluoride | | | | | | | | | |

**[Table 2]**

| | Separator | | Porous membrane | | | | | | Negative electrode Binder |
|---|---|---|---|---|---|---|---|---|---|
| | Heat-resistant resin | Shut-down layer | Position | Filler | | Binder | | | |
| | | | | Kind | Amount (Part by weight) | Kind | Crystal melting point (°C) | Decomposition start temperature (°C) | Kind |
| Comp. example 1 | Polyphenylene sulfide | None | None | - | - | - | - | - | BM-400B +CMC |
| Comp. example 2 | | | Positive electrode | Alumina | 97 | BM-720H | - (Amorphous) | 320 | |
| Comp. example 3 | | | Negative electrode | | | | | | |
| Comp. example 4 | | Polyethylene + Polypropylene | None | - | - | - | - | - | |
| Comp. example 5 | Aramid | None | None | - | - | - | - | - | |
| Comp. example 6 | | | Positive electrode | Alumina | 97 | BM-720H | - (Amorphous) | 320 | |
| Comp. example 7 | | | Negative electrode | | | | | | |
| Comp. example 8 | | Polyethylene + Polypropylene | None | - | - | - | - | - | |
| Comp. example 9 | Polyimide | None | None | - | - | - | - | - | |
| Comp. example 10 | | | Positive electrode | Alumina | 97 | BM-720H | - (Amorphous) | 320 | |
| Comp. example 11 | | | Negative electrode | | | | | | |
| Comp. example 12 | | Polyethylene + Polypropylene | None | - | - | - | - | - | |
| Comp. example 13 | Aramid | | Negative electrode | PE beads | 97 | BM-720H | - (Amorphous) | 320 | |

The respective batteries were evaluated by the following method. Tables 3 and 4 summarize the results.

**[Table 3]**

| | Porous membrane | | Negative electrodes appearance | Battery | | | | | |
|---|---|---|---|---|---|---|---|---|---|
| | Adhesion | Flexibility | | Design capacity | Charge/discharge characteristics | | | Internal short-circuit safety | Overcharge safety |
| | | | | | Charge | Discharge | | Nail speed 180 mm/sec. | 4C mA |
| | | | | | | 400 mA | 4000 mA | Highest temperature | Highest temperature |
| | | (Number of defects/10) | | (mAh) | (mAh) | (mAh) | (mAh) | (°C) | (°C) |
| Example 1 | OK | 0 | Not changed | 2000 | 1990 | 1985 | 1905 | 70 | 120 |
| Examples 2 | OK | 0 | Not changed | 2000 | 1992 | 1990 | 1905 | 71 | 122 |
| Example 3 | OK | 0 | Not changed | 2000 | 1997 | 1995 | 1915 | 70 | 122 |
| Example 4 | OK | 0 | Not changed | 2000 | 1996 | 1992 | 1920 | 72 | 120 |
| Example 5 | OK | 0 | Not changed | 2000 | 1994 | 1990 | 1910 | 72 | 120 |
| Example 6 | OK | 0 | Not changed | 2000 | 1992 | 1989 | 1905 | 71 | 120 |
| Example 7 | OK | 0 | Not changed | 2000 | 1880 | 1870 | 1600 | 71 | 127 |
| Example 8 | OK | 0 | Not changed | 2000 | 1994 | 1990 | 1900 | 65 | 121 |
| Example 9 | OK | 0 | Not changed | 2000 | 1995 | 1990 | 1905 | 68 | 122 |
| Example 10 | OK | 0 | Not changed | 2000 | 1994 | 1990 | 1920 | 70 | 122 |
| Example 11 | OK | 0 | Not changed | 2000 | 1992 | 1989 | 1915 | 71 | 120 |
| Example 12 | OK | 1 | Not changed | 2000 | 1995 | 1990 | 1910 | 69 | 122 |
| Example 13 | NG | 8 | Not changed | 2000 | 1994 | 1992 | 1912 | 70 | 136 |
| Example 14 | OK | 8 | Not changed | 2000 | 1990 | 1985 | 1900 | 71 | 137 |
| Example 15 | OK | 7 | Not changed | 2000 | 1987 | 1982 | 1888 | 78 | 137 |
| Example 16 | OK | 5 | Changed | 2000 | 1985 | 1980 | 1880 | 80 | 132 |
| Example 17 | OK | 0 | Not changed | 2000 | 1996 | 1990 | 1920 | 72 | 120 |
| Example 18 | OK | 2 | Not changed | 2000 | 1970 | 1965 | 1885 | 70 | 132 |
| Reference Example 19 | OK | 1 | Not changed | 2000 | 1990 | 1985 | 1900 | 73 | 137 |

**[Table 4]**

| | Porous membrane | | Negative electrode appearance | Battery | | | | | |
|---|---|---|---|---|---|---|---|---|---|
| | Adhesion | Flexibility | | Design capacity | Charge/discharge characteristics | | | Internal short-circuit safety | Overcharge safety |
| | | | | | Charge | Discharge | | Nail speed 180 mm/sec. | 4C mA |
| | | | | | | 400 mA | 4000 mA | Highest temperature | Highest temperature |
| | | (Number of defects/10) | | (mAh) | (mAh) | (mAh) | (mAh) | (°C) | (°C) |
| Comp. example 1 | - | - | Not changed | 2000 | 1980 | 1975 | 1900 | 71 | 180 |
| Comp. example 2 | OK | 0 | Not changed | 2000 | 1985 | 1980 | 1900 | 70 | 150 |
| Comp. example 3 | OK | 0 | Not changed | 2000 | 1988 | 1985 | 1900 | 75 | 149 |
| Comp. example 4 | - | - | Not changed | 2000 | 1992 | 1989 | 1900 | 70 | 165 |
| Comp. example 5 | - | - | Not changed | 2000 | 1988 | 1980 | 1900 | 68 | 180 |
| Comp. example 6 | OK | 0 | Not changed | 2000 | 1998 | 1990 | 1910 | 65 | 149 |
| Comp. example 7 | OK | 0 | Not changed | 2000 | 1995 | 1990 | 1910 | 65 | 150 |
| Comp. example 8 | - | - | Not changed | 2000 | 1994 | 1990 | 1899 | 72 | 164 |
| Comp. example 9 | - | - | Not changed | 2000 | 1987 | 1980 | 1905 | 70 | 181 |
| Comp. example 10 | OK | 0 | Not changed | 2000 | 1994 | 1990 | 1925 | 71 | 149 |
| Comp. example 11 | OK | 0 | Not changed | 2000 | 1997 | 1995 | 1920 | 65 | 149 |
| Comp. example 12 | - | - | Not changed | 2000 | 1992 | 1987 | 1890 | 75 | 167 |
| Comp. example 13 | OK | 0 | Not changed | 2000 | 1990 | 1985 | 1890 | 75 | 170 |

### [Evaluation method]

### (Adhesion of porous membrane to electrode)

Immediately after the formation of each porous membrane on the electrode surface, the condition of the porous membrane was visually inspected. When cracking or separation of the porous membrane was found, it was expressed as "NG" in Tables 3 and 4, and when the condition was good, it was expressed as "OK".

### (Flexibility of porous membrane)

In winding each electrode with the porous membranes and the separator, the condition of the porous membrane near the winding core was visually inspected. Of each Example and each Comparative Example, ten wound assemblies were observed. The number (n/10) of wound assemblies whose porous membranes became cracked or separated due to winding is shown in Tables 3 and 4.

### (Appearance of negative electrode)

When the porous membrane was formed on the negative electrode surface, the condition of the negative electrode was visually inspected immediately after the formation of the porous membrane. When a dimensional change of the negative electrode was found, it was expressed as "Changed" in Tables 3 and 4, and when no dimension change was found, it was expressed as "Not changed".

### (Battery design capacity)

Since the internal diameters of the battery cans were 18 mm, the diameters of the wound assemblies were standardized at 16.5 mm in view of the ease of insertion. The design capacity determined from the positive electrode weight (150 mAh per gram of positive electrode active material) is shown in Tables 3 and 4.

### (Battery charge/discharge characteristics)

The completed batteries were preliminarily charged and discharged twice in the following preliminary pattern and stored in a 40°C environment for 2 days. Thereafter, the batteries were charged and discharged in the following first and second patterns to determine their discharge capacities.

### (Preliminary pattern)

Charge: the batteries were charged at a constant current of 400 mA until the battery voltage became 4.0 V and then charged at a constant voltage of 4.0 V until the charge current became 50 mA.
Discharge: the batteries were discharged at a constant current of 400 mA until the battery voltage became 3 V.

### (First pattern)

Charge: the batteries were charged at a constant current of 1400 mA until the battery voltage became 4.2 V and then charged at a constant voltage of 4.2 V until the charge current became 30 mA.
Discharge: the batteries were discharged at a constant current of 400 mA until the battery voltage became 3 V.

### (Second pattern)

Charge: the batteries were charged at a constant current of 1400 mA until the battery voltage became 4.2 V and then charged at a constant voltage of 4.2 V until the charge current dropped to 30 mA.
Discharge: the batteries were discharged at a constant current of 4000 mA until the battery voltage dropped to 3 V.

### (Internal short-circuit safety)

After the evaluation of charge/discharge characteristics, the batteries were subjected to a nail penetration test to evaluate safety under internal short-circuit conditions. First, the batteries were charged at a constant current of 1400 mA until the battery voltage became 4.25 V and then charged at a constant voltage of 4.25 V until the charge current became 100 mA. After the charging, a 2.7-mm-diameter iron round nail was driven through each battery from the side face thereof at a speed of 180 mm/sec in a 20°C environment. At this time, the heat generation state of the battery was observed, and the highest temperature of the nail penetration site was measured 90 seconds later.

### (Overcharge safety)

After the evaluation of charge/discharge characteristics, the batteries were overcharged at a current of 8000 mA with the maximum voltage being 10 V. The heat generation state of the batteries was observed, and the highest temperature of the battery side face was measured.

The evaluation results are hereinafter described.
In Examples 1 to 13 with the porous membranes and the shut-down layer, the heat generation of the batteries upon overcharge is significantly suppressed in comparison with Comparative Examples 1, 5, and 9 having neither porous membrane nor shut-down layer. Generally, when the battery temperature exceeds 140°C upon overcharge, the overcharged positive electrode starts to generate heat, but this phenomenon can be avoided in Examples.

When the electrode surface has no porous membrane and the separator has the shut-down layer as in Comparative Examples 4, 8, and 12, the amount of heat generation is suppressed in comparison with Comparative Examples 1, 5, and 9 having only the heat-resistant porous film. However, the amount of heat generation is greater than that of Examples 1 to 13.

When the porous membranes are provided but the separator has no shut-down layer as in Comparative Examples 2, 3, 6, 7, 10, and 11, the amount of heat generation is suppressed in comparison with Comparative Examples 4, 8, and 12 where no porous membrane is provided but the separator has the shut-down layer. However, the amount of heat generation is greater than that of Examples 1 to 13.

In Comparative Examples 1 to 6 and Examples 1 to 6, there was no large difference in evaluation results due to the kind of the heat-resistant resin.

After the evaluation of overcharge safety, the batteries were disassembled for examination. As a result, Examples 1 to 13 did not exhibit thermal shrinkage of the separator caused by heat generated upon overcharge or internal short-circuiting due to deposited lithium. Also, local deposition of lithium was found, and an internal short-circuit between the positive electrode and the negative electrode was found wherever there was deposited lithium. This indicates that the deposited lithium effectively penetrated the heat-resistant separator, causing an internal short-circuit.

In Reference Example 19 where the heat deformation temperature of heat-resistant resin of the separator is 200°C or less, the amount of heat generation was greater than that of Examples 1 to 13, but the heat generation was suppressed in comparison with Comparative Examples 1 to 12. This is because the heat deformation temperature of the copolymer of trifluorochloroethylene and vinylidene fluoride is approximately 160°C, which is higher than the heat deformation temperature (approximately 60 to 100 °C) of polyolefin resin used in common separators. When the battery of Reference Example 19 was disassembled for examination, some degree of thermal shrinkage of the separator was found, and lithium was deposited in a relatively large area. Therefore, the area with an internal short-circuit due to the deposited lithium penetrating the separator was probably relatively small. Accordingly, the heat deformation temperature of the heat-resistant resin used in the heat-resistant porous film is preferably 200°C or more.

When the content of alumina in the porous membrane is too small, degradation of discharge capacity was found in high-rate discharge (Example 7). This is probably because the binder is excessive and thus the porous membrane does not have sufficient pores, which resulted in a decrease in the ionic conductivity of the porous membrane. However, when the content of alumina is too much, the porous membrane significantly became chipped or separated from the electrode surface (Example 13). Although overcharge safety can be assured even if the porous membrane is slightly separated or chipped, the porous membrane is desirably free from separation or chipping in terms of ensuring product stability. Hence, the content of the inorganic oxide filler is desirably 50 to 99 % by weight.

In Example 14 and Example 15 where the binder of the porous membrane is the copolymer of trifluorochloroethylene and vinylidene fluoride or PVDF, the heat generation is suppressed in comparison with Comparative Examples 1 to 12. However, the heat generation is greater than that of Examples 1 to 13. When the batteries after the evaluation of overcharge safety were disassembled for examination, some degree of thermal shrinkage of the porous membrane was found, and lithium was deposited in a relatively large area. Therefore, the area with an internal short-circuit due to the deposited lithium penetrating the separator was probably relatively small. Accordingly, when the binder of the porous membrane has a crystal melting point, the binder preferably has a crystal melting point of 200°C or more.

Table 2 shows that the rubber-like polymer with a polyacrylonitrile chain is particularly suitable as the binder. The rubber-like polymer with a polyacrylonitrile chain is amorphous, has a high decomposition start temperature of 320°C, and has rubber elasticity. Hence, in Examples 1 to 13, the porous membranes have high flexibility and the porous membranes of the wound assemblies have good appearances, in comparison with Examples 14 to 16. On the other hand, Example 14 exhibited 8 defective batteries, Example 15 exhibited 7 defective batteries, and Example 16 exhibited 5 defective batteries.

In Example 16, after the formation of the porous membranes, the negative electrode was deformed. This is probably because the thickener in the negative electrode swelled with the water contained in the undried porous membranes. In order to avoid a decrease in yields, it is desired that a water-insoluble binder be used in the porous membrane and that the raw material paste of the porous membrane contain no water.

Even when titania was used in the porous membrane in place of alumina, essentially the same evaluation result as that of alumina was obtained. However, when polyethylene beads (PE beads) were used in place of alumina (Comparative Example 13), overcharge safety could not be obtained. This is because the heat resistance of the PE beads is only as good as that of the shut-down layer.

Example 18 indicates that even when PVDF is selected as the negative electrode binder, battery safety can be assured. However, a comparison between Example 4 and Example 18 shows that the use of a combination of rubber particles such as SBR and a water-soluble resin such as CMC as the negative electrode binder is preferable.

### Industrial Applicability

The present invention is applicable to lithium ion secondary batteries as a whole, but is particularly useful in lithium ion secondary batteries including a wound electrode assembly. The shape of the lithium ion secondary battery of the present invention is not particularly limited and may be any shape such as cylindrical or rectangular shape. The size of the battery may be small as in small-sized portable appliances or large as in electric vehicles and the like. The present invention can be used as the power source for devices such as personal digital assistants, portable electronic appliances, small-sized power storage devices for home use, two-wheel motor vehicles, electric vehicles, and hybrid electric vehicles. However, its use is not particularly limited.

## Claims

1. A lithium ion secondary battery comprising: a positive electrode comprising a composite lithium oxide; a negative electrode capable of charge and discharge; a separator; and a non-aqueous electrolyte comprising a non-aqueous solvent and a solute dissolved therein,
wherein said separator comprises at least one heat-resistant porous film comprising a heat-resistant resin with a heat deformation temperature of 200 °C or more and at least one shut-down layer,
a porous membrane is bonded to a surface of at least one selected from said positive electrode and said negative electrode, and
said porous membrane comprises an inorganic oxide filler and a binder.

2. The lithium ion secondary battery in accordance with claim 1, wherein said heat-resistant resin comprises at least one selected from the group consisting of polyimide, aramid, and polyphenylene sulfide.

3. The lithium ion secondary battery in accordance with claim 1, wherein said shut-down layer comprises a thermoplastic porous film, and the pores of said thermoplastic porous film are closed at a shut-down temperature of 80°C or more and 180 °C or less.

4. The lithium ion secondary battery in accordance with claim 1, wherein a ratio of said filler to a total of said filler and said binder is 50 % by weight or more and 99 % by weight or less, and said filler comprises alumina or magnesia.

## Patentansprüche

1. Lithiumionensekundärbatterie, die umfasst: eine ein Komposit-Lithiumoxid umfassende positive Elektrode; eine zum Laden und Entladen fähige negative Elektrode; einen Separator; und einen ein nicht-wässriges Lösungsmittel und einen darin gelösten Stoff umfassenden nichtwässrigen Elektrolyt,
wobei der Separator zumindest einen wärmebeständigen porösen Film, umfassend ein wärmebeständiges Harz mit einer Wärmedeformationstemperatur von 200°C oder mehr, und zumindest eine Abschaltschicht umfasst,
eine poröse Membran ist an eine Oberfläche von zumindest einem ausgewählt aus der positiven Elektrode und der negativen Elektrode gebunden, und
die poröse Membran umfasst einen anorganischen Oxid-Füllstoff und ein Bindemittel.

2. Lithiumionensekundärbatterie nach Anspruch 1, wobei das wärmebeständige Harz zumindest eines ausgewählt aus der Gruppe bestehend aus Polyimid, Aramid und Polyphenylensulfid umfasst.

3. Lithiumionensekundärbatterie nach Anspruch 1, wobei die Abschaltschicht einen thermoplastischen porösen Film umfasst, und die Poren des thermoplastischen porösen Films bei einer Abschalttemperatur von 80°C oder mehr und 180°C oder weniger geschlossen sind.

4. Lithiumionensekundärbatterie nach Anspruch 1, wobei ein Verhältnis des Füllstoffs zu einer Gesamtmenge des Füllstoffs und des Bindemittels 50 Gew.-% oder mehr und 99 Gew.-% oder weniger beträgt, und der Füllstoff Aluminiumoxid oder Magnesiumoxid umfasst.

## Revendications

1. Batterie secondaire au lithium-ion comprenant :
une électrode positive comprenant un oxyde de lithium composite ; une électrode négative apte à une charge et à une décharge ; un séparateur ; et un électrolyte non aqueux comprenant un solvant non aqueux et un soluté dissous dans celui-ci,
dans laquelle ledit séparateur comprend au moins un film poreux résistant à la chaleur comprenant une résine résistante à la chaleur avec une température de déformation à la chaleur de 200°C ou plus et au moins une couche de fermeture,
une membrane poreuse est liée à une surface d'au moins une choisie parmi ladite électrode positive et ladite électrode négative, et
ladite membrane poreuse comprend une charge d'oxyde inorganique et un liant.

2. Batterie secondaire au lithium-ion selon la revendication 1, dans laquelle ladite résine résistante à la chaleur comprend au moins un choisi parmi le groupe consistant en un polyimide, un aramide, et un sulfide de polyphénylène.

3. Batterie secondaire au lithium-ion selon la revendication 1, dans laquelle ladite couche de fermeture comprend un film poreux thermoplastique, et les pores dudit film poreux thermoplastique sont fermés à une température de fermeture de 80°C ou plus et 180°C ou moins.

4. Batterie secondaire au lithium-ion selon la revendication 1, dans laquelle un rapport de ladite charge sur un total de ladite charge et dudit liant est 50% en poids ou plus et 99% en poids ou moins, et ladite charge comprend de l'alumine ou de la magnésie.
